(19) Europäisches Patentamt / European Patent Office / Office européen des brevets

(11) **EP 2 893 318 B1**

(12) **FASCICULE DE BREVET EUROPEEN**

(45) Date de publication et mention de la délivrance du brevet:
**29.10.2025 Bulletin 2025/44**

(21) Numéro de dépôt: **13766601.2**

(22) Date de dépôt: **30.08.2013**

(51) Classification Internationale des Brevets (IPC):
**G01N 3/38** *(2006.01)*  **G01N 3/32** *(2006.01)*
**G01M 7/02** *(2006.01)*  **G01M 5/00** *(2006.01)*
**G01N 29/04** *(2006.01)*

(52) Classification Coopérative des Brevets (CPC):
**G01N 29/043; G01M 5/0016; G01M 5/0033; G01M 5/0066; G01M 5/0075; G01M 7/027; G01N 3/38;** G01N 2203/0005; G01N 2203/0066; G01N 2203/0073; G01N 2203/027; G01N 2291/0258; G01N 2291/2693

(86) Numéro de dépôt international:
**PCT/FR2013/052002**

(87) Numéro de publication internationale:
**WO 2014/037654 (13.03.2014 Gazette 2014/11)**

(54) **DISPOSITIF DE DÉTERMINATION EN HAUTE FRÉQUENCE DU SEUIL DE NON-PROPAGATION DE FISSURE PAR FATIGUE**

VORRICHTUNG ZUR BESTIMMUNG DER HOCHFREQUENZ-NICHTAUSBREITUNGSSCHWELLE VON ERMÜDUNGSRISSEN

DEVICE FOR DETERMINING THE HIGH-FREQUENCY NON-PROPAGATION THRESHOLD OF FATIGUE CRACKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.09.2012 FR 1258250**

(43) Date de publication de la demande:
**15.07.2015 Bulletin 2015/29**

(73) Titulaires:
• **Safran Aircraft Engines**
  **75015 Paris (FR)**
  Etats contractants désignés:
  **AL AT BE BG CH CY DE DK EE FI FR GB GR HR HU IE IS IT LI LT LU LV MC MK MT NL NO PT RO RS SE SI SK SM TR**
• **Safran Helicopter Engines**
  **64510 Bordes (FR)**
• **Centre National de la Recherche Scientifique (C.N.R.S.)**
  **75016 Paris (FR)**
• **Ecole Normale Supérieure Paris-Saclay**
  **91190 Gif-sur-Yvette (FR)**

(72) Inventeurs:
• **MARY, Caroline**
  **F-77550 Moissy-Cramayel Cedex (FR)**
• **CLUZEL, Christophe**
  **F-94235 Cachan (FR)**
• **DE MOURA PINHO, Raul, Fernando**
  **F-77550 Moissy-Cramayel Cedex (FR)**
• **LONGUET, Arnaud**
  **F-77550 Moissy-Cramayel Cedex (FR)**
• **POMMIER, Sylvie**
  **F-94235 Cachan (FR)**
• **VOGEL, François**
  **F-64320 Ousse (FR)**

(74) Mandataire: **Cabinet Beau de Loménie**
**103, rue de Grenelle**
**75340 Paris Cedex 07 (FR)**

**(Cont. page suivante)**

(56) Documents cités:

JP-A- S57 120 840     US-A- 4 748 854
US-A1- 2002 017 144

• H. MAYER: "fatigue crack growth and threshold measurements at very high frequency", vol. 44, no. 1, 1 January 1999 (1999-01-01), pages 1 - 34, XP055067429, Retrieved from the Internet <URL:http://docserver.ingentaconnect.com/deliver/connect/maney/09506608/v44/s1.pdf>
• ANONYMOUS: "astm E647-11E1 Standard Test Method for Measurement of Fatigue Crack Growth Rates", ASTM INTERNATIONAL STANDARD, ASTM INTERNATIONAL, US, vol. Section 3 03.01, 1 January 2012 (2012-01-01), pages 675 - 720, XP008163099

• OAKLEY ET AL: "Prediction of the combined high- and low-cycle fatigue performance of gas turbine blades after foreign object damage", INTERNATIONAL JOURNAL OF FATIGUE, BUTTERWORTH SCIENTIFIC LTD, GUILDFORD, GB, vol. 29, no. 1, 1 January 2007 (2007-01-01), pages 69 - 80, XP022134550, ISSN: 0142-1123, DOI: 10.1016/J.IJFATIGUE.2006.02.042
• EMERY J M ET AL: "DDSim: A hierarchical, probabilistic, multiscale damage and durability simulation system - Part I: Methodology and Level I", ENGINEERING FRACTURE MECHANICS, PERGAMON PRESS, NEW YORK, NY, GB, vol. 76, no. 10, 28 February 2009 (2009-02-28), pages 1500 - 1530, XP026185943, ISSN: 0013-7944, [retrieved on 20090228]

**Description**

Arrière-plan de l'invention

La présente invention concerne un dispositif d'essai permettant de déterminer en haute fréquence un seuil de non-propagation de fissure par fatigue d'une aube de turbomachine.

Classiquement, les aubages des turboréacteurs (compresseur et turbine) sont sollicités sur une large plage fréquentielle. Cependant, les fréquences critiques sont principalement celles associées aux premiers modes de flexion des aubes, généralement situés au-delà de 500 Hz. Afin de pouvoir les dimensionner en fatigue, on peut soit déterminer des dimensions d'impacts admissibles sur ces aubes ou plus couramment recourir notamment à un modèle de propagation de fissure par fatigue qui nécessite généralement d'être recalé par des données expérimentales. L'une d'entre elles est le seuil de non-propagation de fissure longue noté $\Delta K_{th}$ qui caractérise l'amplitude seuil $\Delta K$ du facteur d'intensité des contraintes (FIC) au-delà de laquelle une fissure se propage en fatigue.

Néanmoins, pour un matériau donné, ce seuil de non-propagation est déterminé quasi exclusivement en quasi-statique, ce qui n'est pas représentatif des niveaux de fréquences auxquelles sont soumises les aubes au cours de leur vie. De plus, certains matériaux comme le Ti-6Al-4V ou même le TiAl peuvent être sensibles aux effets de l'environnement, ce qui peut se traduire également par une dépendance à la fréquence de ce seuil.

A ce jour, la détermination du seuil de non-propagation est réalisée par des méthodes où une charge décroissante est appliquée sur une éprouvette à l'aide de machines de traction hydrauliques. L'effort imposé est alors asservi en facteur d'intensité des contraintes, ce qui nécessite de connaître l'évolution de la dimension de la fissure au cours de l'essai. Pour ce faire, il existe plusieurs dispositifs d'instrumentation permettant de remonter jusqu'à la dimension de la fissure en cours d'essais. Le premier repose sur une mesure de différence de potentiel à partir d'un courant traversant l'éprouvette. Au fur et à mesure que la fissure se propage, la résistance obtenue, résultant de cette mesure de différence de potentiel, augmente du fait de la réduction de la section utile dans le plan de propagation. Le deuxième repose sur la méthode dite de la complaisance dans laquelle une jauge de déformation est placée sur la face opposée de l'éprouvette où se situe à l'origine la pré-fissure et lorsque la fissure se propage, pour un effort imposé donné, il peut être constaté une augmentation de la déformation mesurée. Cet effet résulte de la diminution de la raideur en traction de l'éprouvette. Avec la courbe maîtresse donnant la relation entre raideur et avancée de fissure, on remonte à la dimension de la fissure. Un troisième repose sur la méthode dite du peigne dans laquelle de nombreuses jauges sont disposées de manière à former un «peigne» sur le trajet de fissuration. Lorsque la fissure atteint une jauge, celle-ci se rompt. A partir de la connaissance du nombre de jauges rompues, il est possible de remonter à la dimension de fissure. Enfin, d'autres encore reposent sur la corrélation d'images ou des mesures optiques à partir desquelles la position de la pointe de fissure est estimée à l'aide d'un système télécentrique.

Toutes ces méthodes traditionnelles s'appuient sur un dispositif d'instrumentation de la dimension de la fissure en cours d'essai, ce qui permet de réguler en temps réel le facteur d'intensité de contrainte (FIC) appliqué au fond de la fissure (FIC=b*S*$\sqrt{(\Pi*a)}$ avec b le facteur de forme de la fissure, S la contrainte appliquée et a la dimension caractéristique de la fissure). Une décroissance du FIC est ainsi appliquée et le seuil est considéré atteint dès que la vitesse d'avance de la fissure (mesurée en cours d'essais) est inférieure à une valeur donnée, par exemple de $10^{-10}$ m/cycles, comme le propose la norme ASTM E647.

L'inconvénient majeur de ces méthodes traditionnelles est, outre le fait que la caractérisation du seuil est systématiquement réalisée en quasi-statique (1 à 30Hz) et suppose donc que la valeur de non-propagation obtenue est constante en fonction de la fréquence, ce qui n'est pas exact, la nécessité de disposer d'une instrumentation in-situ de la dimension de la fissure. En effet, les dispositifs par mesure de potentiel ne sont applicables que sur un matériau conducteur et nécessitent un système d'acquisition et de traitement des données rapide pour assurer la régulation. Or, ceci n'est en général pas possible à des fréquences élevées comme celles vues par les pièces et auxquelles on souhaite caractériser les matériaux (>500Hz). La méthode de la complaisance peut être appliquée sur tout matériau homogène mais nécessite également un système d'acquisition et de traitement des données rapide pour assurer la régulation, également incompatible avec les fréquences recherchées en dimensionnement. La méthode du peigne ne conduit pas forcément à un asservissement efficace. En effet, la longueur de la fissure ne peut être déterminée que de manière discrète, c'est-à-dire aux endroits où sont positionnées les jauges. Il se peut alors que des effets de surcharge apparaissent en pointe de fissure. Enfin, les mesures optiques ne peuvent être utilisées que lorsque la vitesse de propagation de la fissure est suffisamment lente. Entre deux mesures, la variation de la longueur de fissure doit être faible pour éviter l'effet de surcharge en pointe de fissure.

La publication de brevet US4748854 décrit un appareil configuré pour effectuer un test de propagation de fissure à haute fréquence, il comprend donc un échantillon ayant un trou central circulaire avec une fissure à mi-longueur.

La publication de brevet JPS57120840 décrit une éprouvette configurée pour effectuer un test de propagation de fissure à haute fréquence, ladite éprouvette ayant un trou elliptique et une entaille effectuée à une extrémité du grand axe dudit trou elliptique et dans la direction du chargement.

## Objet et résumé de l'invention

La présente invention a donc pour but de pallier les inconvénients précités en proposant un dispositif de détermination en haute fréquence ( fréquence comprise entre 300 Hz et 2000 Hz) du seuil de non propagation de fissure par fatigue d'une éprouvette structurelle dont la géométrie particulière permet cette détermination.

A cet effet, il est prévu un dispositif de détermination en haute fréquence du seuil de non-propagation de fissure par fatigue selon la revendication 1.

Avec ce dispositif aucune mesure de longueur de fissure en cours d'essai, ni aucun asservissement sur cette mesure ne sont plus nécessaires.

De préférence, ledit constat de l'arrêt de la fissure est effectué par le comptage d'un nombre prédéterminé de chargements cycliques (typiquement compris entre 8 et 12 millions de cycles)

L'invention concerne un dispositif d'essai permettant la détermination en haute fréquence du seuil de non-propagation de fissure par fatigue selon la revendication 1.

Ainsi, en excitant le montage en traction dynamique sur sa fréquence propre à l'aide du pot vibrant électrodynamique on peut atteindre des niveaux de chargement suffisamment élevés pour générer une fissure de fatigue dont l'arrêt de propagation permettra la détermination du seuil de non-propagation.

De préférence, ce dispositif comporte en outre une ou plusieurs masses supplémentaires pour en modifiant ladite fréquence propre du dispositif varier ladite fréquence de chargement.

Ladite entaille est effectuée à une extrémité du grand axe dudit trou elliptique et dans la direction dudit chargement.

De préférence, lesdits montants sont des équerres rigides.

Ladite éprouvette est mise initialement en compression par une traction sur lesdites deux plaques de précontrainte obtenue par une réduction progressive d'un jeu initial existant entre une desdites extrémités desdites deux plaques de précontrainte et l'une en vis à vis desdites deux masses rigides.

Selon l'invention, ladite fréquence propre du dispositif est comprise entre 300 Hz et 2000Hz.

## Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :

- les figures 1A et 1B montrent une éprouvette mise en œuvre dans un dispositif d'essai permettant la détermination du seuil de non-propagation de fissure en fatigue selon l'invention ;
- la figure 2 illustre le taux de décroissance en ∆K de l'éprouvette des figures 1A et 1B ;
- la figure 3 montre le dispositif d'essai permettant la détermination du seuil de non-propagation de fissure en fatigue selon l'invention ; et
- la figure 4 illustre une variante à deux éprouvettes d'une partie du dispositif de la figure 3.

## Description détaillée de l'invention

Selon l'invention, il est proposé d'appliquer un chargement cyclique extérieur de moyenne et d'amplitude constante sur une éprouvette structurale comportant un trou elliptique et pré-entaillée en bord de trou. La présence de ce trou elliptique génère un gradient de contrainte et son rapport d'ellipticité associé à la dimension de son ½ grand axe permet alors d'assurer que le facteur d'intensité des contraintes en pointe de fissure présente le taux de décroissance désiré pour la détermination du seuil de non-propagation de fissure en fatigue. La fissure s'arrête alors d'elle-même sous ce chargement décroissant et il suffit de relever la longueur finale de la fissure arrêtée pour remonter à la détermination de la valeur ∆Kth. Le relevé de la longueur de la fissure sera effectué une fois l'essai terminé, le dépouillement requiert simplement l'usage d'un abaque.

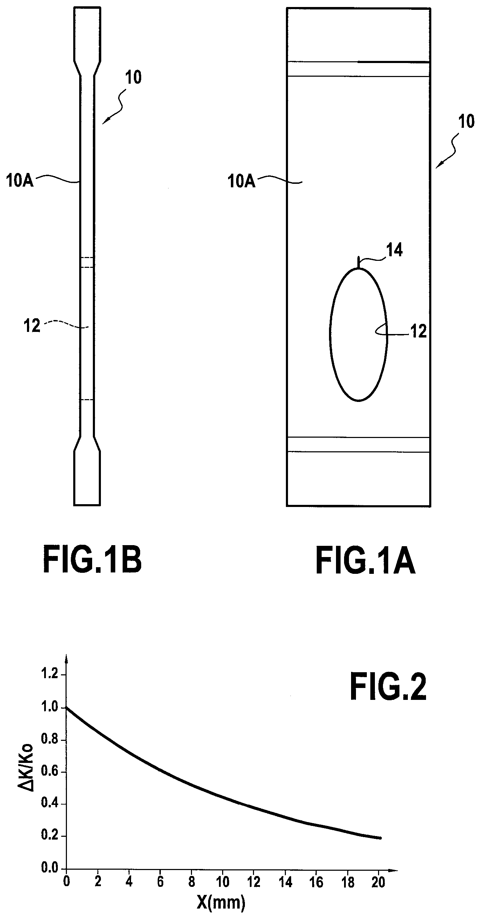

Les figures 1A et 1B illustrent la géométrie de l'éprouvette nécessaire à la mise en œuvre du dispositif d'essai de l'invention. L'éprouvette 10 est de préférence de forme rectangulaire et comporte dans sa partie centrale d'épreuve 10A un trou elliptique 12 engendrant un gradient de contrainte sur cette éprouvette. A un sommet du trou, plus précisément à l'extrémité de son grand axe, et dans la direction de la sollicitation (chargement), l'éprouvette comporte une entaille 14 réalisée, par exemple par électroérosion (entaille EDM à front droit), de manière à pouvoir initier facilement une fissure de fatigue. Comme illustré, cette éprouvette présente de préférence une épaisseur réduite dans la zone d'épreuve 10A.

En effet, lorsque l'éprouvette est soumise à un chargement de compression, des contraintes de traction apparaissent au bord du trou, du fait de l'effet Poisson élastique. Avec un chargement cyclique de compression (ou de traction-compression), la fissure s'ouvre et se referme à chaque cycle et donc se propage par fatigue. En l'absence de fissure, la contrainte est positive au bord du trou, diminue progressivement dans la zone de concentration de contrainte et tend vers zéro lorsqu'on s'éloigne du trou. Par conséquent, si une fissure se propage depuis le bord du trou, plus la longueur de propagation est élevée et plus le facteur d'intensité des contraintes (FIC) est faible. La fissure de fatigue s'arrête lorsque l'amplitude du facteur d'intensité des contraintes atteint le seuil de non propagation $\Delta K_{th}$ pendant la phase de propagation.

La forme du trou elliptique conditionne le taux de décroissance du facteur d'intensité des contraintes avec l'avancée de fissure. Il est donc important de dimensionner ce trou elliptique (grand axe et rapport petit axe sur grand axe) afin d'obtenir la courbe ΔK en fonction de la longueur de fissure voulue. Le taux de décroissance de ΔK diminue si le rapport petit axe sur grand axe augmente et si la dimension du petit axe diminue. Un taux optimal de décroissance permet à la fois d'éviter les effets de surcharges en pointe de fissure et de diminuer l'incertitude sur la mesure de la longueur de la fissure (et donc sur le calcul de $\Delta K_{th}$) lorsque celle-ci s'est arrêtée de se propager.

La figure 2 illustre ce taux de décroissance qui est, selon la norme précitée, exprimé par la formule suivante :

$$\Delta K(x)/\Delta KO = \exp(-0,08.x)$$

où x est la distance entre la pointe de fissure et le bord du trou elliptique (en mm) et ΔKO l'amplitude maximale atteinte par ΔK près du trou elliptique.

Lors du dimensionnement de l'éprouvette, on doit donc veiller à ce que la variation du ΔK avec l'avancée de fissure, générée par le trou elliptique 12 et l'entaille 14, permette d'encadrer le seuil attendu. En effet, c'est la géométrie de l'éprouvette qui pilote l'évolution du facteur d'intensité des contraintes avec l'avancée de fissure. Par exemple, pour une éprouvette rectangulaire dont les dimensions de la zone d'épreuve 10A sont de 70 x 30 x 3 (longueur, largeur et épaisseur en millimètres), le centre de l'ellipse ayant un grand axe de 24mm et un petit axe de 12mm est positionné à 25mm de la limite basse de cette zone d'épreuve. L'entaille est réalisée sur 1,5mm à partir du sommet du grand axe de l'ellipse et dans le prolongement de ce grand axe.

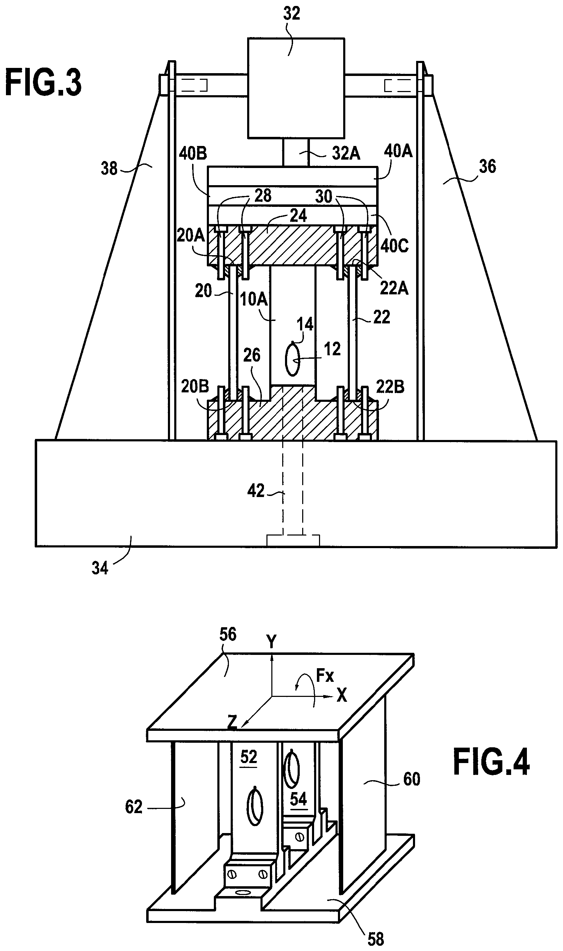

Le dispositif d'essai permettant la détermination en haute fréquence du seuil de non-propagation de fissure par fatigue est illustré à la figure 3. L'éprouvette 10 est soumise à une précharge statique par deux plaques rigides de précontrainte 20, 22 (en matériau composite par exemple) disposées de part et d'autre de l'éprouvette et fixées par une extrémité 20A, 22A à l'une de deux masses rigides 24, 26 entre lesquelles l'éprouvette est encastrée, l'autre extrémité 20B, 22B de ces deux plaques étant fixée avec un jeu initial à l'autre 22 de ces deux masses. Ce jeu initial peut être introduit avec la masse rigide du haut 24 ou celle du bas 26 mais, avantageusement, la réduction progressive de ce jeu initial est effectuée au niveau des attaches avec la masse rigide du haut par une paire de vis de fixation 28, 30 permettant alors en agissant en traction sur ces deux plaques de précontrainte de mettre l'éprouvette en compression. Les masses 24, 26 permettent d'ajouter de la rigidité et de modifier la fréquence propre de l'ensemble éprouvette/plaques de précontrainte.

La sollicitation vibratoire du montage ainsi obtenu est réalisée à l'aide d'un pot vibrant électrodynamique 32 fixé rigidement au bâti du dispositif, par exemple un marbre support 34, et transmettant au montage formé des masses et des plaques de précontrainte rigides entourant l'éprouvette, via une ou plusieurs masses supplémentaires 40A-40C, l'effort délivré par le pot vibrant. Afin d'obtenir le maximum de déformation à chaque cycle en traction sur l'éprouvette, la fréquence du chargement est prise égale à la fréquence propre en traction du montage. Comme cette dernière est égale à la racine carrée de la raideur du système (éprouvette + plaques de pré contrainte) divisée par la masse en mouvement, l'adjonction ou le retrait des masses supplémentaires 40A-40C permet de faire varier cette fréquence propre et donc de réaliser des essais de mesure du seuil de non-propagation de fissure $\Delta K_{th}$ à différentes fréquences, des hautes fréquences de préférence comprises entre 300 Hz et 2000Hz. L'amplification modale étant importante, pour un effort imposé relativement faible, les déformations sur l'éprouvette peuvent être importantes tout comme le facteur d'intensité des contraintes appliqué en pointe de fissure.

L'arrêt de la propagation de la fissure est constaté simplement par un comptage du nombre de sollicitations effectuées, de préférence compris entre 8 et 12 millions de cycles. Cette valeur est choisie à partir d'une estimation de l'ordre de grandeur du seuil $\Delta K_{th}$ et de la vitesse de propagation. La sollicitation cyclique peut donc aussi être arrêtée et l'éprouvette retirée du dispositif afin de relever la longueur finale de la fissure et à l'aide d'un abaque de déterminer ledit seuil ΔKth de non propagation de fissure par fatigue.

Il convient bien entendu de fixer rigidement par des moyens de fixation, par exemple de type vis 42 le montage sur le marbre support 34. En effet, tout décollement, même simplement local de ce dernier, peut entrainer une perte dans la transmission de l'énergie mécanique délivrée par le pot vibrant électrodynamique 32 au montage et donc également à l'éprouvette 10.

Ainsi, avec les éprouvettes précédentes, on obtient les résultats suivants : Pour un rapport de charge de 0.7 correspondant à une amplitude de contrainte sur l'éprouvette de 80,7 MPa et une fréquence de sollicitation de 803 Hz, la fissure a parcouru avant arrêt 8,6 mm. En utilisant l'abaque, on détermine $\Delta K_{th}$ comme étant égal à 2,7 MPa.vm.

On notera que si dans la description précédente il a été fait référence à un montage en traction, il est clair qu'un chargement de type flexion est aussi envisageable. Notamment, comme l'illustre la figure 4, si le montage contient deux éprouvettes 52, 54 au lieu d'une seule et que l'écart entre les deux éprouvettes est suffisamment élevé, alors même si le chargement imposé sur le montage formé des deux masses 56, 58 et des deux plaques de précontrainte 60, 62 est de type flexion, le champ de contraintes appliqué sur l'une ou l'autre des éprouvettes est quasiassimilable à de la traction.

## Revendications

1. Dispositif d'essai permettant la détermination du seuil de non-propagation de fissure par fatigue comportant :

   . au moins une éprouvette (10 ; 52, 54) comportant dans une zone d'épreuve (10A) un trou elliptique (12) ayant une entaille (14) pouvant initier une fissure de fatigue dans une direction de chargement, le trou elliptique ayant un grand axe orienté selon la direction de chargement et l'entaille étant réalisée à partir du sommet du grand axe de l'ellipse et dans le prolongement de ce grand axe, la longueur finale de ladite entaille lorsque celle-ci s'arrête de se propager déterminant ledit seuil $\Delta K_{th}$ de non-propagation de fatigue,
   . deux masses rigides (24, 26 ; 56, 58) entre lesquelles ladite au moins une éprouvette est maintenue,
   . deux plaques rigides de précontrainte (20, 22 ; 60, 62) disposées de part et d'autre de ladite au moins une éprouvette et fixées à chacune de leurs deux extrémités (20A, 22A ; 20B, 22B) auxdites deux masses rigides,
   . un pot vibrant électrodynamique (32) fixé solidairement à l'aide de montants rigides (36, 38) à un bâti (34) supportant lesdites deux masses rigides et comportant une tige de poussée (32A) pour transmettre à ladite au moins une éprouvette dans la direction de chargement, via lesdites deux masses rigides, un chargement cyclique dont la fréquence est choisie égale à la fréquence propre du dispositif, comprise entre 300Hz et 2000Hz, de façon à générer depuis ladite entaille ladite fissure de fatigue.

2. Dispositif d'essai selon la revendication 1, **caractérisé en ce qu'**il comporte en outre une ou plusieurs masses supplémentaires (40A-40C) pour en modifiant ladite fréquence propre du dispositif varier ladite fréquence de chargement.

3. Dispositif d'essai selon la revendication 1 ou la revendication 2, **caractérisé en ce que** ladite éprouvette est mise initialement en compression par une traction sur lesdites deux plaques de précontrainte obtenue par une réduction progressive du jeu initial existant entre une desdites extrémités desdites deux plaques de précontrainte et l'une en vis à vis desdites deux masses rigides.

4. Dispositif d'essai selon l'une quelconque des revendications 1 à 2, comprenant deux éprouvettes (52, 54), **caractérisé en ce que** le chargement imposé sur le montage formé des deux masses rigides (56, 58) et des deux plaques de précontrainte (60, 62) est de type flexion.

5. Dispositif d'essai selon la revendication 3 ou la revendication 4, caractérisé en ce lesdites plaques de précontrainte sont en matériau composite.

6. Dispositif d'essai selon l'une quelconque des revendications 1 à 5, **caractérisé en ce que** lesdits montants sont des équerres rigides.

## Patentansprüche

1. Prüfvorrichtung, welche die Bestimmung der Schwelle der Nichtausbreitung von Ermüdungsrissen erlaubt und beinhaltet:

   - zumindest ein Prüfstück (10; 52, 54), das in einer Prüfzone (10A) ein elliptisches Loch (12) beinhaltet, das eine Einkerbung (14) aufweist, die einen Ermüdungsriss in einer Belastungsrichtung initiieren kann, wobei das elliptische Loch eine Hauptachse aufweist, die gemäß der Belastungsrichtung ausgerichtet ist und die Einkerbung ausgehend vom Scheitelpunkt der Hauptachse der Ellipse und in der Verlängerung dieser Hauptachse ausgeführt ist, wobei die endgültige Länge der Einkerbung, wenn diese aufhört sich auszubreiten, die Schwelle $\Delta K_{th}$ der Nichtausbreitung der Ermüdung bestimmt,
   - zwei starre Massen (24, 26; 56, 58), zwischen welchen das zumindest eine Prüfstück gehalten wird,
   - zwei starre Vorspannungsplatten (20, 22; 60, 62), die auf beiden Seiten des zumindest einen Prüfstücks angeordnet und an jedem ihrer zwei Enden (20A, 22A; 20B, 22B) an den zwei starren Massen befestigt sind,
   - einen elektrodynamischen Schwingungstopf (32), der mit Hilfe von starren Stützen (36, 38) fest an einem Gestell (34) befestigt ist, das die beiden starren Massen trägt und eine Schubstange (32A) beinhaltet, um auf das mindestens eine Prüfstück in der Belastungsrichtung über die beiden starren Massen eine zyklische Belastung zu übertragen, deren Frequenz gleich der Eigenfrequenz der Vorrichtung gewählt wird, die zwischen 300 Hz und 2.000 Hz liegt, um von der Einkerbung aus den Ermüdungsriss zu erzeugen.

2. Prüfvorrichtung nach Anspruch 1, **dadurch gekennzeichnet, dass** sie ferner eine oder mehrere zusätzliche Massen (40A-40C) beinhaltet, um durch Modifizieren der Eigenfrequenz der Vorrichtung die Belastungsfrequenz zu variieren.

**3.** Prüfvorrichtung nach Anspruch 1 oder Anspruch 2, **dadurch gekennzeichnet, dass** das Prüfstück anfänglich durch einen Zug auf die beiden Vorspannungsplatten, der durch eine progressive Verringerung des Spiels erhalten wird, das anfänglich zwischen einem der Enden der zwei Vorspannungsplatten und dem den zwei starren Massen gegenüberliegenden vorliegt, unter Kompression gesetzt wird.

**4.** Prüfvorrichtung nach einem der Ansprüche 1 bis 2, umfassend zwei Prüfstücke (52, 54), **dadurch gekennzeichnet, dass** die Belastung, die auf die Anordnung ausgeübt wird, die aus den zwei starren Massen (56, 58) und den zwei Vorspannungsplatten (60, 62) gebildet wird, vom Typ einer Biegung ist.

**5.** Prüfvorrichtung nach Anspruch 3 oder Anspruch 4, **dadurch gekennzeichnet, dass** die Vorspannungsplatten aus Verbundmaterial bestehen.

**6.** Prüfvorrichtung nach einem der Ansprüche 1 bis 5, **dadurch gekennzeichnet, dass** die Stützen starre Winkel sind.

**Claims**

**1.** A test device enabling the non-propagation threshold for fatigue cracks at high frequency to be determined, the device comprising:

· at least one testpiece (10; 52, 54) having an elliptical hole (12) in a test zone (10A), the hole having a notch (14) capable of initiating a fatigue crack in a loading direction, the elliptical hole having a major axis oriented along the loading direction and the notch being made from the apex of the major axis of the ellipse and in the extension of this major axis, the final length of said notch when it stops propagating determining said fatigue non-propagation threshold $\Delta K_{th}$;
· two rigid masses (24, 26; 56, 58) between which said at least one testpiece is held;
· two rigid pre-stress plates (20, 22; 60, 62) arranged on either side of said at least one testpiece and each fastened at its two ends (20A, 22A; 20B, 22B) to said two rigid masses; and
· an electrodynamic vibrator pot (32) securely fastened by means of rigid uprights (36, 38) to a structure (34) supporting said two rigid masses and including a thrust rod (32A) for transmitting cyclic loading to said at least one testpiece via said two rigid masses, said cyclic loading having a frequency that is selected to be equal to the resonant frequency of the device so as to generate a fatigue crack from said notch.

**2.** A test device according to claim 1, **characterized in that** it further includes one or more additional masses (40A-40C) for varying said loading frequency by modifying said resonant frequency.

**3.** A test device according to claim 1 or claim 2, **characterized in that** said testpiece is initially put into compression by traction on said two pre-stress plates obtained by progressively reducing clearance that exists initially between one of said ends of said two pre-stress plates and a facing one of said two rigid masses.

**4.** A test device according to claim 1 or claim 2, comprising two testpieces (52, 54), **characterized in that** the loading imposed by the setup comprising two rigids masses (56, 58) and two pre-stress plates (60, 62) is of the bending type.

**5.** A test device according to claim 3 or claim 4, **characterized in that** said pre-stress plates (60, 62) are made of composite material.

**6.** A test device according to any one of claims 1 to 5, **characterized in that** said uprights are rigid brackets.

**FIG.1B**

**FIG.1A**

**FIG.2**

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4748854 A

- JP 57120840 S